(19) **Europäisches Patentamt**
**European Patent Office**
**Office européen des brevets**

(11) **EP 1 334 546 B1**

(12) **EUROPÄISCHE PATENTSCHRIFT**

(45) Veröffentlichungstag und Bekanntmachung des Hinweises auf die Patenterteilung:
**26.01.2011 Patentblatt 2011/04**

(21) Anmeldenummer: **01996915.3**

(22) Anmeldetag: **15.11.2001**

(51) Int Cl.:
**H02K 1/00** *(2006.01)*

(86) Internationale Anmeldenummer:
**PCT/DE2001/004260**

(87) Internationale Veröffentlichungsnummer:
**WO 2002/041468 (23.05.2002 Gazette 2002/21)**

(54) **VORRICHTUNG UND VERFAHREN ZUR ERMITTLUNG DES ELEKTRISCHEN STARTROTORWINKELS**

DEVICE AND METHOD FOR DETERMINING THE ELECTRICAL STARTING ROTOR ANGLE

DISPOSITIF ET PROCEDE PERMETTANT DE DETERMINER L'ANGLE DU ROTOR ELECTRIQUE AU DEMARRAGE

(84) Benannte Vertragsstaaten:
**ES FR GB IT SE**

(30) Priorität: **16.11.2000 DE 10056879**

(43) Veröffentlichungstag der Anmeldung:
**13.08.2003 Patentblatt 2003/33**

(73) Patentinhaber: **ROBERT BOSCH GMBH**
**70442 Stuttgart (DE)**

(72) Erfinder:
- **KUNZ, Olaf**
  **64689 Grasellenbach (DE)**
- **FROEHLICH, Gerhard**
  **70839 Gerlingen (DE)**
- **BARINBERG, Viktor**
  **77815 Bühl (DE)**

(74) Vertreter: **Thürer, Andreas**
**Rexroth Indramat GmbH,**
**Bürgermeister-Dr.-Nebel-Strasse 2**
**97816 Lohr am Main (DE)**

(56) Entgegenhaltungen:
- **BRUNOTTE C ET AL: "Detection of the starting rotor angle of of a PMSM at standstill" EPE'97. 7TH EUROPEAN CONFERENCE ON POWER ELECTRONICS AND APPLICATIONS, PROCEEDINGS OF 7TH EUROPEAN CONFERENCE ON POWER ELECTRONICS AND APPLICATIONS, TRONDHEIM, NORWAY, 8-10 SEPT. 1997, Seiten 250-253 vol.1, XP002207173 1997, Brussels, Belgium, EPE Assoc, Belgium ISBN: 90-75815-02-6**
- **LOCCI N ET AL: "Rotor position detection in variable reluctance motors" ELROMA-92. TECHNICAL PAPERS OF THE THIRD INTERNATIONAL CONFERENCE ON ELECTRICAL ROTATING MACHINES, BOMBAY, INDIA, 15-16 JAN. 1992, Seiten VIA/60-7 vol.2, XP002207172 1992, Vadodara, India, Electr. Res. & Dev. Assoc, India**

**Beschreibung**

Stand der Technik

Die Erfindung geht aus von einer Vorrichtung und einem Verfahren zur Ermittlung des elektrischen Startrotorwinkels nach der Gattung der unabhängigen Ansprüche. Aus dem Artikel "detection of the starting rotor angel of a pmsm at standstill", C. Brunotte, W. Schumacher, EPE/97, Seiten 1250 bis 1253, wird eine Vorgehensweise zur Bestimmung des elektrischen Startrotorwinkels beschrieben. Hierzu wird ein permamentmagneterregter Synchronmotor mit einem sinusförmigen Strom von 500 Hz beaufschlagt. Von einem auftretenden Strom wird zur Bestimmung des elektrischen Rotorwinkels das Spektrum bestimmt. Aufgrund von Sättigungseffekten und daraus resultierender Asymmetrien des Stromverlaufs kann die Stellung des mit Spulen ausgestatteten Stators des Synchronmotors gegenüber dem mit Permanentmagneten ausgestatteten Rotor ermittelt werden. Beispielsweise anhand einer Fast-Fourier-Transformation wird aus dem gemessenen Stromverlauf der Koeffizienz der zweiten Harmonischen des Spektrums bestimmt. Dieser Koeffizient der zweiten Harmonischen ist ein Maß für den elektrischen Rotorwinkel.

Es ist Aufgabe der Erfindung, das eingangs beschriebene Verfahren zur elektrischen Startrotorwinkelbestimmung hinsichtlich der Genauigkeit weiter zu verbessert. Diese Aufgabe wird durch die Merkmale der unabhängigen Ansprüche 1 und 6 gelöst.

Vorteile der Erfindung

Das erfindungsgemäße Verfahren und die erfindungsgemäße Vorrichtung zeichnen sich nun dadurch aus, dass aus dem Spektrum der Meßgröße sowohl Grundwelle (erste Harmonische) als auch die erste Oberwelle (zweite Harmonische) ermittelt und zueinander ins Verhältnis gesetzt werden als Maß für den Startrotorwinkel des Elektromotors, vorzugsweise Synchronmotor. Als besonders geeignet hat sich hierbei herausgestellt, zur Bestimmung des Startrotorwinkels die erste Oberwelle durch die dritte Potenz der Grundwelle zu dividieren. Dadurch können insbesondere Asymmetrien, die auf die Bauweise des Motors zurückzuführen sind, besser berücksichtigt werden. Dies wirkt sich positiv auf die Genauigkeit der Startrotorwinkelbestimmung aus, was sich anhand nachfolgend gezeigter Messkurven belegen lässt.

In einer alternativen Ausgestaltung ist vorgesehen, den Elektromotor mit einer sinusförmigen Spannung zu beaufschlagen. Der den Elektromotor ansteuernde Wechselrichter fungiert somit als Spannungsgenerator. Die Amplitude und der Startphasenwinkel der einzuspeisenden Spannung lassen sich leicht an den jeweiligen Motor anpassen. Die Spannung ist einerseits so gewählt, dass zur leichteren Messwerterfassung ein hoher Strom fließt, der Motor jedoch andererseits noch nicht in Bewegung versetzt wird, um undefinierte Anfahrvorgänge zu unterbinden. Die Amplitude der Spannung hängt vorzugsweise von dem Nennstrom des Motors, der Motorinduktivität, beziehungsweise der Reaktanz der Motorinduktivität, ab. Die eingeprägte Spannung bringt deutlich bessere Nutzsignale für die Auswertung, als ein eingeprägter Strom.

In einer zweckmäßigen Weiterbildung ist vorgesehen, den Elektromotor für eine bestimmte Zeitspanne mit einer sinusförmigen Spannung zu beaufschlagen, die Messgröße jedoch nicht zugleich am Anfang, sondern vorzugsweise gegen Ende des Einspeisevorgangs für die Weiterverarbeitung zu erfassen. Wird der Elektromotor beispielsweise mit acht Sinusschwingungen bei 500 Hz gespeist, so werden lediglich die drei letzten Schwingungsperioden des resultierenden Stromes zur Spektralanalyse ausgewertet, nicht hingegen die fünf Anfangsschwingungen. Durch das gezielte Ausblenden von Einschwingvorgängen kann die Qualität der Messung weiterhin verbessert werden.

In einer zweckmäßigen Weiterbildung ist vorgesehen, zumindest zweimal die Messgrößen zu erfassen zur Bestimmung der Amplituden der Grundwelle und der ersten Oberwelle. Bei dem zweiten Erfassungsvorgang wird der Elektromotor mit einem von der ersten Ansteuerung unterschiedlichen elektrischen Winkel beaufschlagt. Zumindest zwei Messungen sind erforderlich, um eindeutig den Startrotorwinkel rechnerisch zu bestimmen.

In einer zweckmäßigen Weiterbildung ist vorgesehen, aus zumindest drei Messgrößen die spektralen Informationen zu erhalten. Da nun zumindest eine Messgröße nicht zwingend erforderlich ist zur Startrotorwinkelbestimmung, können die Messwerte zum Beispiel durch die Methode der kleinsten Quadrate gefiltert werden. Die Qualität der Winkelbestimmung lässt sich weiter verbessern.

In einer zweckmäßigen Weiterbildung ist ein inkrementeller Geber vorgesehen, der die Bewegung des Motors erfasst. Die Signale des inkrementalen Gebers werden zwischen den zumindest zwei Messungen erfasst und für die Bestimmung des elektrischen Startrotorwinkels berücksichtigt. Der elektrische Startrotorwinkel kann dadurch im Falle eines sich während der Messungen bewegenden Elektromotors mit hoher Genauigkeit bestimmt werden.

Weitere zweckmäßige Weiterbildungen ergeben sich aus weiteren abhängigen Ansprüchen und aus der Beschreibung.

Zeichnung

Ein Ausführungsbeispiel ist in der Zeichnung dargestellt und wird nachfolgend beschrieben.

Es zeigen die Figuren 1 ein Blockschaltbild einer Anordnung zur elektrischen Startrotorwinkelermittlung, die Figur 2 den Verlauf der ersten Oberwelle I2 des Stroms in Abhängigkeit von dem elektrischen Rotorwinkel nach dem Stand der Technik, die Figur 3 den Verlauf der ersten Oberwelle dividiert durch die dritte Potenz der Grundschwingung in Abhängigkeit von dem elektrischen Rotorwinkel gemäß dem Ausführungsbeispiel - jeweils einer Referenz-Sinuskurve gegenübergestellt, die Figur 4a den zeitabhängigen Verlauf der eingeprägten Spannung, die Figur 4b den zeitabhängig dargestellten erfassten Stromverlauf, die Figur 5 eine genauere Darstellung des Verhältnisses von erster Oberwelle zu der dritten Potenz der Grundwelle in Abhängigkeit von dem elektrischen Rotorwinkel sowie Figur 6 ein Flussdiagramm des Verfahrens zur Ermittlung des elektrischen Startrotorwinkels.

Beschreibung des Ausführungsbeispiels

Die Drehung eines elektrischen Motors 10 erfasst ein Inkrementalgeber 12, dessen Inkrementalgebersignal 30 an eine Auswerteeinheit 18 gelangt. Ein Wechselrichter 20 erzeugt aus einer Gleichspannung eines Gleichspannungszwischenkreises, die von einem Versorgungsmodul 22 bereitgestellt wird, näherungsweise sinusförmige Spannungen bzw. Ströme, mit denen eine erste, eine zweite und eine dritte Phase 24, 26, 28 des Elektromotors 10 beaufschlagt werden. Der durch die erste Phase 24 fließende Strom wird von einem ersten Stromsensor 14, der durch die zweite Phase 26 fließende Strom von einem zweiten Stromsensor 16 erfaßt, welche als erster Stromwert 32 und als zweiter Stromwert 34 der Auswerteeinheit 18 zugeführt werden. In der Auswerteeinheit 18 ist ein Speicher 19 angeordnet. Die Auswerteeinheit 18 steuert den Wechselrichter 20 an.

Als Elektromotor 10 kommt insbesondere ein permanentmagneterregter Synchronmotor zum Einsatz. Die Bestimmung des elektrischen Startrotorwinkels ist für die gezielte Ansteuerung des Motors 10 notwendig, um eine Bewegung in der erwünschten Anfahrrichtung zu erzielen. Bei dem Ausführungsbeispiel kann insbesondere auf einen Absolutwertgeber verzichtet werden.

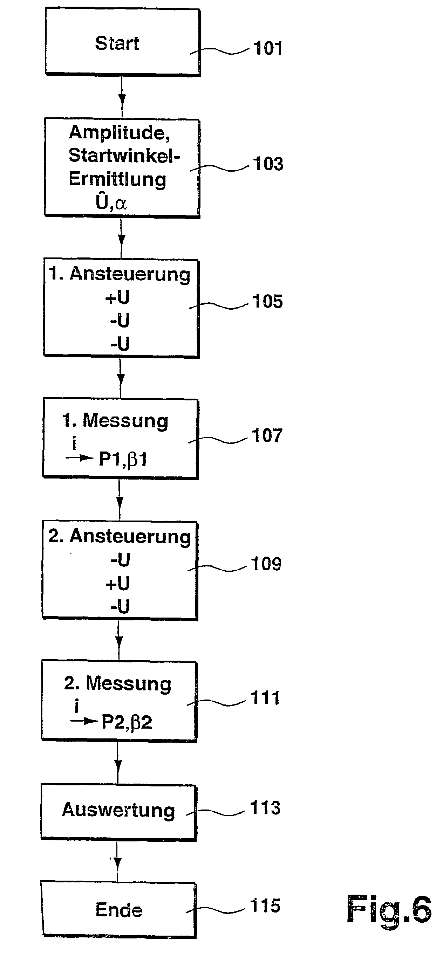

Die Vorgehensweise zur Ermittlung des elektrischen Startrotorwinkels wird in Verbindung mit Figur 6 näher erläutert. In Schritt 101 erhält die Auswerteeinheit 18 ein entsprechendes Aktivierungssignal, um das Verfahren zur Ermittlung eines elektrischen Startrotorwinkels δ zu beginnen. In Schritt 103 werden die Spannungsamplitude U sowie der Startphasenwinkel α ermittelt als Parameter für die von dem Wechselrichter 20 einzuprägende näherungsweise sinusförmige Spannung. Die Parameter der einzuprägenden Spannung wie die Amplitude Ü sowie der Startphasenwinkel α lassen sich leicht in Abhängigkeit von dem jeweils anzusteuernden Motor 10 bestimmen. Hierzu wird auf motorspezifische Kenngrößen wie der maximale Strom IN, die Motorwicklungsinduktivität L, sowie der Motorwiderstand r zurückgegriffen. Diese motorspezifischen Kenngrößen L, r, IN könnten beispielsweise in dem Speicher 19 oder in einem elektronischen Typenschild am Motor hinterlegt werden und in Verbindung mit dem Startvorgang, Schritt 101, zu der Auswerteeinheit 18 übertragen werden. Die Auswerteeinheit 18 ermittelt aus den motorspezifischen Kenngrößen L, r, IN die Spannungsamplitude Û beispielsweise nach folgender Formel:

$$\hat{U} = \sqrt{2}\ \, IN \cdot \sqrt{r^2 + (L \cdot \omega)^2}\, ,$$

wobei ω die Kreisfrequenz $2\,\pi\,f$ bei einer Schwingung von beispielsweise f = 500 Hz ist.

Der Startphasenwinkel α wird nach der Formel ermittelt:

$$\alpha = \arctan\left(\frac{\omega L}{r}\right).$$

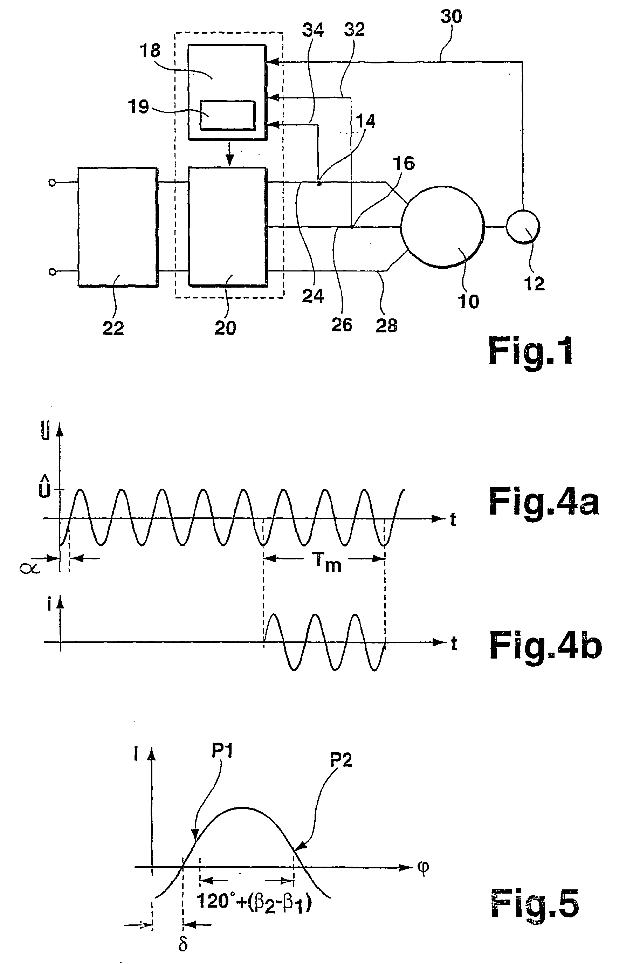

Dieser Startphasenwinkel α gibt an, bei welchem Winkel α die einzuprägende sinusförmige Spannung U gestartet werden soll, um Einschwingvorgänge zu minimieren, wie beispielsweise in Figur 4a angedeutet. Die beispielhaft genannte Dimensionierung der einzuprägenden Spannung U führt einerseits zu einem relativ hohen Strom i, der andererseits jedoch den Motor 10 noch nicht zu einer Bewegung veranlaßt. Die Einprägung einer relativ großen Spannungsamplitude Û stellt nämlich sicher, das der Sättigungsbereich des Eisens erreicht wird, bei dem die auszuwertenden Nichtlinearitäten auftreten. Andererseits ist jedoch die Spannung U so dimensioniert, dass der maximale Strom IN des Motors in der Regel nicht überschritten wird. Die Auswertung lässt sich durch die Einprägung einer Spannung U besonders leicht erreichen, da die erforderlichen Stromsensoren vorhanden sind. Andererseits könnte das Messprinzip, wie bereits im Stand der Technik beschrieben, auch mit einem einzuprägenden Strom durchgeführt werden.

Die Auswerteeinheit 18 steuert nun den Wechselrichter 20 so an, dass dieser eine sinusförmige Spannung U beispielsweise der Frequenz 500 Hz mit der Amplitude Û und dem Startphasenwinkel α ausgibt. Der ersten Ansteuerung gemäß Schritt 105 wird beispielsweise die erste Phase 24 mit der in Figur 4a gezeigten Sinusspannung beaufschlagt, während die zweite und dritte Phase 26, 28 mit jeweils hierzu invertierten Spannungswerten versorgt werden. Diese Ansteuerung gemäß Schritt 105 wird beispielsweise für acht Sinusschwingungen aufrecht erhalten. Der Ansteuerzeitraum ist grundsätzlich so zu wählen, dass die Messzeiten für die nachfolgende Strommessung außerhalb der Einschwingvorgänge liegen. Gemäß Figur 4 wird davon ausgegangen, dass die Einschwingvorgänge nach fünf Periodendauern der eingeprägten Spannung U so weit abgeklungen sind, sodass in den verbleibenden drei Periodendauern innerhalb der Messzeit tm der Stromverlauf des sich einstellenden Stroms i aufgenommen werden kann.

Der in Figur 4b gezeigte und von der eingeprägten Spannung U hervorgerufene Stromverlauf i wird beispielsweise von dem ersten Stromsensor 14, gegebenenfalls abgetastet, erfaßt und an die Auswerteeinheit 18 weitergegeben. Außerdem erfaßt die Auswerteeinheit 18 das Inkrementalgebersignal 30 mit einem korrespondierenden Stärtwert β1. Dies dient insbesondere der Berücksichtigung eines sich möglicher Weise zwischen den beiden Messungen (Schritt 107, Schritt 111) bewegenden Motors 10. Die Auswerteeinheit 18 bestimmt aus dem erfaßten Stromverlauf i, wie beispielsweise in Figur 4b dargestellt, das Spektrum, insbesondere die Amplitude der Grundschwingung I1 sowie die Amplitude der ersten Oberwelle I2 des zugehörigen Spektrums des Stroms. Unter Grundschwingung wird die Anregungsfrequenz der einzuprägenden Spannung U, beispielsweise 500 Hz, verstanden, unter erster Oberwelle das Doppelte der Anregungsfrequenz ( 2 · 500 Hz) verstanden. Dies kann beispielsweise mit Hilfe der bekannten Fast-Fourier-Transformation oder mit den im Stand der Technik beschriebenen Algorithmen erfolgen. Daraus ergibt sich ein erster Wert P1, wenn folgende Formel Verwendung findet :

$$l = I2 : (I1)^3,$$

wobei I1 die Grundwelle, I2 die erste Oberwelle des Stromverlaufs i.

Der eindeutigen Bestimmung einer Sinuskurve gemäß Figur 5 bedarf es noch einer zweiten Messung, aus deren Auswertung der zweite Punkt P2 hervorgeht.

Diese zweite Ansteuerung gemäß Schritt 109 wird nun beispielsweise mit einem gegenüber der ersten Messung abweichenden Feldwinkel, beispielsweise von 120 °, durchgeführt. Die einzuprägende Sinusspannung behält die in Schritt 103 ermittelten Parameter Û, α bei. Nun wird jedoch die zweite Phase 26 mit der in Figur 4a gezeigten Sinusspannung beaufschlagt, während die erste und die dritte Phase 26, 28 mit der hierzu invertierten Spannung angesteuert werden, um einen gegenüber der ersten Ansteuerung (Schritt.105) veränderten bekannten Feldwinkel zu erhalten (beispielsweise bei der beschriebenen Ansteuerung 120 °). Wiederum wird der resultierende Stromverlauf i der letzten drei Perioden tm erfaßt. Nach der Spektralanalyse wird wiederum die zweite Oberwelle I2 durch die dritte Potenz der Grundwelle I1 geteilt, so dass sich der zweite Punkt P2 ergibt. Anhanddes Inkrementalgebersignals 30 steht nun auch der Inkrementalgeberwinkel β2 zum Zeitpunkt der zweiten Messung (Schritt 111) zur Verfügung.

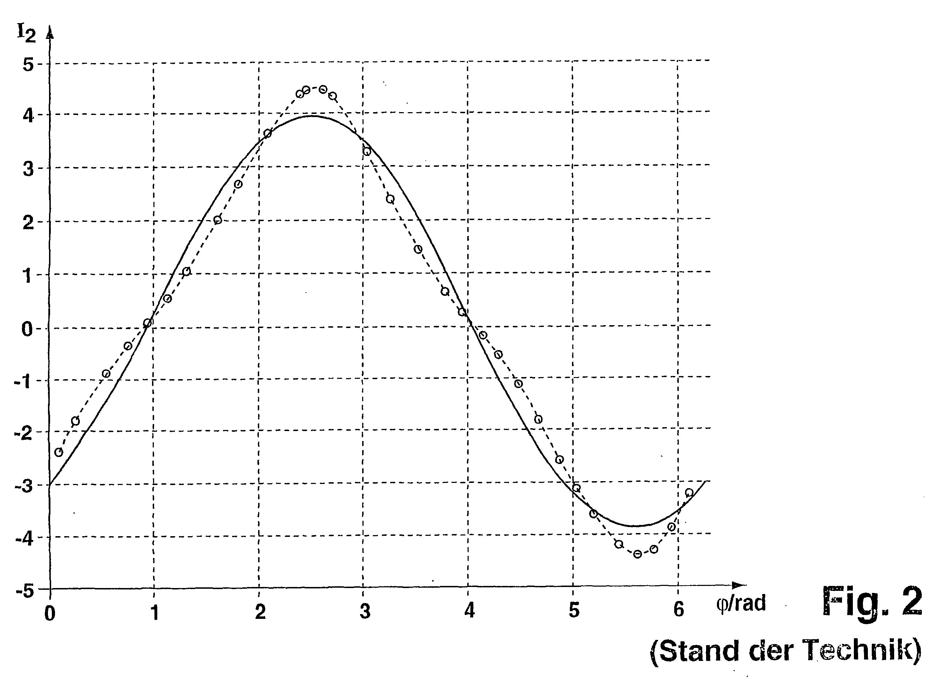

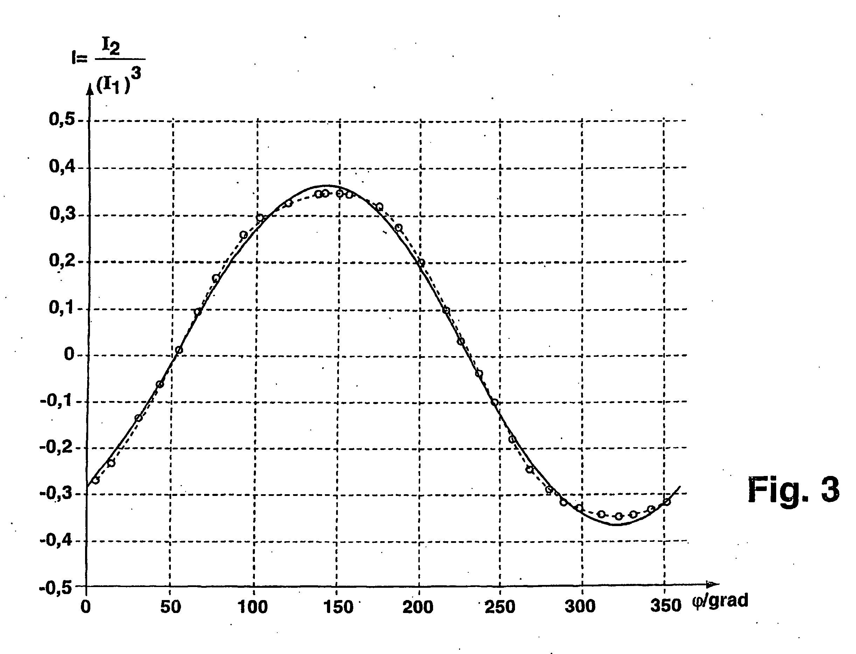

In der nachfolgenden Auswertung gemäß Schritt 113 soll nun der elektrische Startrotorwinkel δ ermittelt werden. Bekannt sind lediglich aus der ersten Messung (Schritt 107) der erste Punkt P1 sowie der erste Inkrementalgeberwinkel β1, sowie aus der zweiten Messung (Schritt 111) der zweite Punkt P2 sowie der zweite Inkrementalgeberwinkel β2. Außerdem ist näherungsweise bekannt, dass der elektrische Rotorwinkel 9 einen sinusförmigen Verlauf annimmt. Dies ist beispielsweise in Figur 3 gezeigt. Hier wurden unterschiedliche Verhältnisse von der ersten Oberschwingung I2 dividiert durch die dritte Potenz der Grundschwingung I1 angetragen in Abhängigkeit von dem elektrischen Rotorwinkel φ. Es läßt sich ein deutlich verbesserter sinusfömiger Verlauf gegenüber der Berechnungsmethode nach dem Stand der Technik (Figur 2) erkennen, bei dem lediglich die zweite Oberwelle I2 als Maß für den elektrischen Winkel φ verwendet wurde. Der elektrische Startrotorwinkel δ kann nun numerisch anhand der nachfolgenden Gleichungssysteme ermittelt werden:

$$\delta = \arctan \frac{b}{a}$$

$$P1 = a \cdot \sin \beta 1 + b \cdot \cos \beta 1$$

$$P2 = a \cdot \sin(\beta 2 - 120°) + b \cdot \cos(\beta 2 - 120°),$$

wobei $P1 = (I21) : (I11)^3$, $P2 = (I22) : (I12)^3$,

wobei I11 die Grundwelle des Stromverlaufs i aus der ersten Messung (Schritt 107), I21 die zweite Oberwelle aus dem Stromverlauf i der ersten Messung (Schritt 107), I12 die Grundwelle des Stromverlaufs i aus der zweiten Messung (Schritt 111), I22 die zweite Oberwelle des Stromverlaufs i der zweiten Messung (Schritt 111).

Das obige Gleichungssystem mit drei Unbekannten und drei Gleichungen läßt sich eindeutig lösen. Mit dem nun bekannten elektrischen Startrotorwinkel δ ist eine gezielte Ansteuerung des Motors 10 mit Blick auf die gewünschte Anlaufrichtung möglich.

In einer alternativen Ausgestaltung ist vorgesehen, zusätzlich zu den Ansteuerungen und Messungen der Schritte 105, 107; 109, 111 noch eine dritte Ansteuerung mit zugehöriger Erfassung durchzuführen. In der dritten Ansteuerung wird der Motor 10 um weitere 120 ° versetzt angesteuert, d.h. die dritte Phase 28 wird mit einer, wie beispielsweise in Figur 4a gezeigten sinusförmigen Spannung beaufschlagt, die erste und zweite Phase 24, 26 hingegen mit einer hierzu invertierten Spannung. Anschließend wird der sich ergebende Verlauf des Stroms in der dritten Phase 28 sowie das Ausgangssignal des Inkrementalgebers 12, β3 erfasst. In übereinstimmender Weise wird der dritte Punkt P3 aus dem Verhältnis der ersten Oberwelle I2 dividiert durch die dritte Potenz der Grundwelle I1 gebildet. Nun stehen also drei Punkte P1, P2, P3 zur Verfügung, die näherungsweise auf einer Sinuskurve liegen sollen. Diese Sinuskurve wird unter Verwendung der drei Punkte sowie der drei Inkrementalgebersignale β1, β2, β3 beispielsweise nach der Methode der kleinsten Quadrate ermittelt. Daraus wird der Startrotorwinkel δ bestimmt.

Der Kurvenverlauf der Anregungsspannung muß nicht notwendiger Weise sinusförmig sein, eine periodische Schwingung genügt, um die Grundwelle und die erste Oberwelle der erfassten Messgröße zu ermitteln.

**Patentansprüche**

1.  Verfahren zur Ermittlung eines elektrischen Startrotorwinkels eines Elektromotors, mit folgenden Schritten:

    Beaufschlagen des Elektromotors (10) mit einer periodischen elektrischen Größe (U),
    Erfassen eines zugehörigen ersten Verlaufs einer Meßgröße (i),
    Ermitteln eines ersten Verhältnisses (P1) eines Maßes einer Grundwelle (I1) und eines Maßes einer ersten Oberwelle (I2) aus dem Spektrum des ersten Verlaufs der Meßgröße (i), wobei die erste Oberwelle (I2) geteilt wird durch die dritte Potenz der Grundwelle (I1),
    erneutes Beaufschlagen des Elektromotors (10) mit einer periodischen elektrischen Größe (U),
    Erfassen eines zugehörigen zweiten Verlaufs der Meßgröße (i),
    Ermitteln eines zweiten Verhältnisses (P2) eines Maßes einer Grundwelle (I1) und eines Maßes einer ersten Oberwelle (I2) aus dem Spektrum des zweiten Verlaufs der Meßgröße (i),
    wobei die erste Oberwelle (I2) geteilt wird durch die dritte Potenz der Grundwelle (I1),
    Bestimmung des elektrischen Startrotorwinkels (δ) auf Grundlage des ersten Verhältnisses (P1) und des zweiten Verhältnisses (P2).

2.  Verfahren nach Anspruch 1, wobei der Elektromotor (10) mit einer periodischen Spannung (U) als periodische elektrische Größe (U) beaufschlagt wird und ein Stromverlauf (i) als Verlauf der Meßgröße ermittelt wird.

3.  Verfahren nach Anspruch 2, **dadurch gekennzeichnet, dass** die Amplitude (Û) sowie der Startphasenwinkel (α) bei einer in etwa sinusförmigen Spannung (U) in Abhängigkeit von mindestens einer motorspezifischen Kenngröße (IN, L, r) bestimmt wird.

4.  Verfahren nach einem der vorherigen Ansprüche, **dadurch gekennzeichnet, dass** die den Elektromotor (10) beaufschlagende elektrische Größe (U) in Abhängigkeit von zumindest einer motorspezifischen Kenngröße (IN, L, r) gebildet wird.

5. Verfahren nach einem der vorherigen Ansprüche, **dadurch gekennzeichnet, dass** der Elektromotor (10) für eine vorgebbare Zeitspanne mit einer periodischen elektrischen Größe (U) beaufschlagt wird, wobei die Meßgröße (i) in einem gegenüber der Ansteuerzeit verkleinerten Meßintervall (tm) erfaßt wird.

6. Vorrichtung zur Ermittlung eines elektrischen Startrotorwinkels eines Elektromotors, mit einer Signalerfassung (18), die ein Ansteuersignal für einen Wechselrichter (20) erzeugt, der zumindest ein Ausgangsignal (32, 34) zumindest eines Sensors (14, 16) zugeführt ist, die aus einer erfaßten Meßgröße (i) zur Bestimmung des elektrischen Startrotorwinkels (δ) zumindest die erste Oberwelle (I2) ermittelt, **dadurch gekennzeichnet, dass** zur Bestimmung des Startrotorwinkels (δ) die Auswerteeinheit (18) auch die Grundwelle (I1) der Meßgröße (i) und ein erstes (P1) und ein zweites (P2) Verhältnis eines Maßes der Grundwelle (I1) und eines Maßes der ersten Oberwelle (I2) bestimmt, wobei die Auswerteeinheit (18) erste Oberwelle (I2) durch die dritte Potenz der Grundwelle (I1) teilt und den Startrotorwinkels (δ) auf Grundlage des ersten Verhältnisses (P1) und des zweiten Verhältnisses (P2) bestimmt.

7. Vorrichtung nach dem vorhergehenden Anspruch, **dadurch gekennzeichnet, dass** Auswertemittel (18) vorgesehen sind, die aus zumindest einer Motorkenngröße (IN, L, r) zumindest eine Amplitude (Û) und/oder einen Startphasenwinkel (α) einer elektrischen Größe (U) bestimmen, mit der der Elektromotor (10) angesteuert wird.

8. Vorrichtung nach einem der vorhergehenden Ansprüche 6 oder 7, **dadurch gekennzeichnet, dass** die Auswerteeinheit (18) ein Inkrementalgebersignal (30) auswertet, um eine zwischenzeitliche Bewegung des Motors (10) bei der Bestimmung des elektrischen Startrotorwinkels (δ) zu berücksichtigen.

**Claims**

1. Method for determining an electrical starting rotor angle of an electric motor, having the following steps:

   applying a periodic electrical quantity (U) to the electric motor (10),
   detecting an associated first profile of a measured quantity (i),
   determining a first ratio (P1) of a measure of a fundamental wave (I1) and a measure of a first harmonic (I2) from the spectrum of the first profile of the measured quantity (i), the first harmonic (I2) being divided by the third power of the fundamental wave (I1),
   again applying a periodic electrical quantity (U) to the electric motor (10),
   detecting an associated second profile of the measured quantity (i),
   determining a second ratio (P2) of a measure of a fundamental wave (I1) and a measure of a first harmonic (I2) from the spectrum of the second profile of the measured quantity (i),
   the first harmonic (I2) being divided by the third power of the fundamental wave (I1), and
   determining the electric starting rotor angle (d) on the basis of the first ratio (P1) and the second ratio (P2).

2. Method according to Claim 1, in which a periodic voltage (U) is applied as periodic electrical quantity (U) to the electric motor (10), and a current profile (i) is determined as profile of the measured quantity.

3. Method according to Claim 2, **characterized in that** the amplitude (Û) and the starting phase angle (a) are determined in the case of an approximately sinusoidal voltage (U) as a function of at least one motor-specific parameter (IN, L, r).

4. Method according to one of the preceding claims, **characterized in that** the electrical quantity (U) applied to the electric motor (10) is formed as a function of at least one motor-specific parameter (IN, L, r).

5. Method according to one of the preceding claims, **characterized in that** a periodic electrical quantity (U) is applied to the electric motor (10) for a prescribable time interval, the measured quantity (i) being detected in a measurement interval (tm) which is reduced by comparison with the drive time.

6. Device for determining an electrical starting rotor angle of an electric motor, having a signal detection unit (18) which generates a drive signal for an inverter (20) and to which at least one output signal (32, 34) of at least one sensor (14, 16) is fed and which determines at least the first harmonic (I2) from a detected measured quantity (i) in order to determine the electrical starting rotor angle (d), **characterized in that** in order to determine the starting rotor angle (d) the evaluation unit (18) also determines the fundamental wave (I1) of the measured quantity (i) and a first (P1) and a second (P2) ratio of a measure of the fundamental wave (I1) and a measure of the first harmonic (I2), the evaluation unit (18) dividing the first harmonic (I2) by the third power of the fundamental wave (I1), and determining the starting rotor angle (d) on the basis of the first ratio (P1) and the second ratio (P2).

7. Device according to the preceding claim, **characterized in that** evaluation means (18) are provided, which determine from at least one motor parameter (IN, L, r) at least one amplitude (Û) and/or a starting phase angle (a) of an electrical quantity (U) with which the electric motor (10) is controlled.

8. Device according to either of the preceding Claims 6 and 7, **characterized in that** the evaluation unit (18) evaluates an incremental encoder signal (30) in order to take account of an intermediate movement of the motor (10) when determining the electrical starting rotor angle (d).

**Revendications**

1. Procédé pour déterminer un angle de rotor de départ électrique d'un moteur électrique, comprenant les étapes suivantes :

   sollicitation du moteur électrique (10) avec une grandeur électrique périodique (U),
   détection d'une première courbe associée d'une grandeur mesurée (i),
   détermination d'un premier rapport (P1) entre une grandeur d'une onde fondamentale (I1) et une grandeur d'une première harmonique (I2) à partir du spectre de la première courbe de la grandeur mesurée (i), la première harmonique (I2) étant divisée par le cube de l'onde fondamentale (I1),
   nouvelle sollicitation du moteur électrique (10) avec une grandeur électrique périodique (U),
   détection d'une deuxième courbe associée de la grandeur mesurée (i),
   détermination d'un deuxième rapport (P2) entre une grandeur d'une onde fondamentale (I1) et une grandeur d'une première harmonique (I2) à partir du spectre de la deuxième courbe de la grandeur mesurée (i), la première harmonique (I2) étant divisée par le cube de l'onde fondamentale (I1),
   détermination de l'angle de rotor de départ (δ) électrique en se basant sur le premier rapport (P1) et sur le deuxième rapport (P2).

2. Procédé selon la revendication 1, dans lequel le moteur électrique (10) est sollicité avec une tension périodique (U) en tant que grandeur électrique périodique (U) et une courbe de courant (i) est déterminée comme courbe de la grandeur mesurée.

3. Procédé selon la revendication 2, **caractérisé en ce que** l'amplitude (Û) ainsi que l'angle de phase de départ (α) sont déterminés avec une tension (U) approximativement sinusoïdale en fonction d'au moins une grandeur caractéristique (IN, L, r) spécifique au moteur.

4. Procédé selon l'une des revendications précédentes, **caractérisé en ce que** la grandeur électrique (U) qui sollicite le moteur électrique (10) est formée en fonction d'au moins une grandeur caractéristique (IN, L, r) spécifique au moteur.

5. Procédé selon l'une des revendications précédentes, **caractérisé en ce que** le moteur électrique (10) est sollicité avec une grandeur électrique périodique (U) pendant une période qui peut être prédéfinie, la grandeur mesurée (i) étant détectée dans un intervalle de mesure (tm) réduit par rapport au temps d'excitation.

6. Dispositif pour déterminer un angle de rotor de départ électrique d'un moteur électrique, comprenant un dispositif de détection de signal (18) qui génère un signal de commande pour un onduleur (20) et auquel est acheminé au moins un signal de sortie (32, 34) d'au moins un capteur (14, 16), qui détermine au moins la première harmonique (I2) à partir d'une grandeur mesurée (i) détectée afin de déterminer l'angle de rotor de départ (δ) électrique, **caractérisé en ce que** pour déterminer l'angle de rotor de départ (δ), l'unité d'interprétation (18) détermine également l'onde fondamentale (I1) de la grandeur mesurée (i) ainsi qu'un premier (P1) et un deuxième (P2) rapport entre une grandeur de l'onde fondamentale (I1) et une grandeur de la première harmonique (I2), l'unité d'interprétation (18) divisant la première harmonique (I2) par le cube de l'onde fondamentale (I1) et déterminant l'angle de rotor de départ (δ) en se basant sur le premier rapport (P1) et sur le deuxième rapport (P2).

7. Dispositif selon la revendication précédente, **caractérisé en ce que** des moyens d'interprétation (18) sont prévus, lesquels déterminent à partir d'au moins une grandeur caractéristique du moteur (IN, L, r) au moins une amplitude (Û) et/ou un angle de phase de départ (α) d'une grandeur électrique (U) avec laquelle est commandé le moteur électrique (10).

8. Dispositif selon l'une des revendications précédentes 6 ou 7, **caractérisé en ce que** l'unité d'interprétation (18) interprète un signal de codeur incrémental (30) afin de tenir compte, lors de la détermination de l'angle de rotor de départ ($\delta$) électrique, d'un mouvement intérimaire du moteur (10).

**Fig.1**

**Fig.4a**

**Fig.4b**

**Fig.5**

Fig. 2
(Stand der Technik)

Fig. 3

EP 1 334 546 B1

```
┌─────────────────┐
│      Start      │ ⟋‾‾ 101
└─────────────────┘
         │
         ▼
┌─────────────────┐
│    Amplitude,   │
│  Startwinkel-   │ ⟋‾‾ 103
│    Ermittlung   │
│      Û,α        │
└─────────────────┘
         │
         ▼
┌─────────────────┐
│  1. Ansteuerung │
│       +U        │ ⟋‾‾ 105
│       -U        │
│       -U        │
└─────────────────┘
         │
         ▼
┌─────────────────┐
│   1. Messung    │
│    i            │ ⟋‾‾ 107
│    → P1,β1      │
└─────────────────┘
         │
         ▼
┌─────────────────┐
│  2. Ansteuerung │
│       -U        │ ⟋‾‾ 109
│       +U        │
│       -U        │
└─────────────────┘
         │
         ▼
┌─────────────────┐
│   2. Messung    │
│    i            │ ⟋‾‾ 111
│    → P2,β2      │
└─────────────────┘
         │
         ▼
┌─────────────────┐
│   Auswertung    │ ⟋‾‾ 113
└─────────────────┘
         │
         ▼
┌─────────────────┐
│      Ende       │ ⟋‾‾ 115
└─────────────────┘
```

**Fig.6**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **C. Brunotte ; W. Schumacher.** detection of the starting rotor angel of a pmsm at standstill. *EPE/97,* 1250-1253